Europäisches Patentamt

European Patent Office

Office européen des brevets

(11) Veröffentlichungsnummer : **0 434 900 B1**

# EUROPÄISCHE PATENTSCHRIFT

(45) Veröffentlichungstag der Patentschrift :
**30.12.92 Patentblatt 92/53**

(51) Int. Cl.$^5$ : **A01C 1/04,** A01G 31/02

(21) Anmeldenummer : **90115895.6**

(22) Anmeldetag : **20.08.90**

(54) **Flächenhafter Saatträger mit einer unteren und einer oberen Bahn zum Aufkleben von Samenkörnern.**

(30) Priorität : **14.12.89 DE 3941222**

(43) Veröffentlichungstag der Anmeldung :
**03.07.91 Patentblatt 91/27**

(45) Bekanntmachung des Hinweises auf die
Patenterteilung :
**30.12.92 Patentblatt 92/53**

(84) Benannte Vertragsstaaten :
**AT BE CH DE DK ES FR GB GR IT LI LU NL SE**

(56) Entgegenhaltungen :
**CH-A- 562 001**
**DE-A- 3 817 289**
**FR-A- 1 540 887**
**FR-A- 2 632 251**
**GB-A- 1 041 133**
**US-A- 4 037 360**

(73) Patentinhaber : **SUET SAAT-UND
ERNTETECHNIK GmbH
Strassbourger Strasse 2, Postfach 780
W-3440 Eschwege (DE)**

(72) Erfinder : **Fuss, Ernst-Otto
W-3441 Berkatal (DE)**
Erfinder : **Hörner, Ernst-Ludwig, Dipl.-Ing.
Augusta Strasse 61
W-3440 Eschwege (DE)**
Erfinder : **Schiller, Eduard
W-3447 Meissner 4 (DE)**
Erfinder : **Heil, Wilfried
//
W-3447 Bad Sooden-Allendorf 1 (DE)**

(74) Vertreter : **Jahn-Held, Wilhelm W. Dr.Dr.-Ing.
Dipl.-Chem.
Schöne Aussicht 8
W-3513 Staufenberg-Landwehrhagen (DE)**

**Beschreibung**

Gegenstand der Erfindung ist ein flächenhafter Saatträger mit einer unteren dünnen, verrottbaren Papierbahn, einem darauf abgestreiften Klebstoff, auf dem positionsgenau mit optimalen Kulturabstand Samenkörner aufgeklebt sind, und einer oberen, aufgeklebten, dünneren, verrottbaren Papierbahn wobei, der Saatträger aufgerollt oder in Teillängen abgeschnitten ist.

Die deutsche Patenschrift 26 56 294 beschreibt einen gattungsgemässen flächenhaften Saatträger mit einer unteren Papierbahn aus dünnen, kurzen, glatten Fasern aus nicht geleimtem verdichtetem Papier und aus einer oberen leichteren Papierbahn, wobei auf der Oberfläche der unteren Papierbahn Klebstellen oder Klebstreifen angeordnet sind, auf denen die Samenkörner reihenparallel festgeklebt sind. Der Klebstoff ist in seiner Menge und in seinem Feststoffgehalt so beschränkt, dass die Zunahme des Wassergehaltes der Papierbahnen und der Samenkörner auf nur 1 bis 2 % begrenzt ist.

Diese Saatträger hat dadurch den Nachteil, dass mit der begrenzten Menge wasserlöslicher Klebstoff kein zusätlich Netz aufgeklebt werden kann. Mit einer grösseren Menge Wasser würde der Wassergehalt des Saatträgers so ansteigen, dass diese nicht mehr lagerfähig sind, oder eine Trocknung benötigen würden, die ein Qualitätsrisiko darstellt.

Die schweizer Patentschrift 562 001 beschreibt ein Verfahren zur Herstellung einer pflanzenbewachsenen Matte aus Gras. Diese Matte besteht aus einem mehrschichtigem Träger aus einer nicht durchdringbaren, folienartigen Grundschicht und einem darüber angeordnetem Drahtnetz, die durch einen Klebstoff verbunden sind. Das Drahtnetz wird mit einer Nährbodenmischung beschichtet, die auch Samenkörner enthält.

Der Aufbau dieser Matten hat den Nachteil, dass die folienartige Grundschicht aus Polyvinyl-Verindungen keine Bewurzelung durchtreten lässt. Diese Matte muss zur Kultivierung der Pflanzen abgezogen werden. Es wird dabei Wurzelwerk zerstört, und es werden einzelne Pflanzen herausgezogen. Diese Matte hat auch den Nachteil, dass keine Ablage der Samenkörner und keine Kultivierung von Pflanzen im erforderlichen, positionsgenauen Kulturabstand möglich ist durch die Vermischung von Nährboden und Samenkörnern.

Die britische Patentschrift 1 041 133 beschreibt Samenpakete zum Vorkeimen von Saatug zum Auspflanzen. Die Streifen der Samenpakete sollen eine Durchwurzelung ausschliessen.Es soll ein Streifen von aussen zugeführtes Wasser zum Keimen aufnehmen können durch wasserlösliche Adsorptionsmittel. Es soll such auch der Samen zwischen Streifen aus Polystyrol befinden, die keine Feuchtigkeit aufnehmen. Diese sollen nur zur Verstärkung des Paketes und als Abstandshalter zum Schutz des Samens und der Keimlinge gegen Zerdrücken beim Aufrollen oder Falten und beim Transport zum Auspflanzen dienen. Der flächenhafte Saatträger der Erfindung verwendet keine Vorkeimung und Auspflanzen. Dieser führt die Keimung der Saatkörner und das Wachsen der Pflanzen auf dem gleichen Boden durch.Dieser verwendet auch ein definiertes Netz in Maschenweite und Zugkraft für ein kulturoptimales Ausbringen und gestattet eine mechanische Ernte der Pflanzen.

Gegenstand der Erfindung ist ein flächenhafter Saatträger mit einer unteren dünnen, verrottbaren Papierbahn, einem darauf abgestreiftem Klebstoff, auf dem positionsgenau mit optimalem Kulturabstand Samenkörner aufgeklebt sind, und einer oberen, aufgeklebten dünneren, verrottbaren Papierbahn, der aufgerollt und in Teillängen abgeschnitten ist.

Es ist die Aufgabe des flächenhaften Saatträgers der Erfindung, das Pflanz- und Ernteverfahren zu mechanisieren und die Erntequalität zu erhöhen und dadurch diese wirtschaftlich optimal und praktisch verlustfrei zu gestalten.

Der flächenhafte Saatträger der Erfindung ist im kennzeichnenden Teil des Anspruches 1 definiert.

Dieser ist dadurch gekennzeichnet, dass der Klebstoff ein wasserunlöslicher Schmelzkleber ist, der im Temperaturbereich von unter 40°C bis zu Raumtemperatur und bei einem Andrücken mit Schaumstoffwalzen oder Noppenwalzen druckklebrig bleibt, und der in einer Menge von 3 bis 15 g/cm$^2$ in dünner Schicht auf die unter Papierbahn aufgebracht wird, wodurch die aufgeklebten Samenkörner dauerhaft mit der unteren Papierbahn verbunden bleiben, und dass über den Samenkörnern ein aus unverrottbarem Kunststoff, oder ein während der Kultivierungsdauer der sich aus den Samenkörner entwickelnden Pflanzen unverrottbares, imprägniertes Netz aus Naturfasern so aufgeklebt ist, dass die Samenkörner in den Lücken des Netzes posioniert sind.

Die alternative und bevorzugte Ausgestaltung des flächenhaften Saatträgers der Erfindung ist in den abhängigen Ansprüchen 2 bis 9 beansprucht.

Diese betreffen Imprägnierungsmittel für ein Netz aus Naturfaser, sowie ein Netz aus Kunststoff.

Weiter betreffen diese die Ausbildung des Netzes aus Kunststoff und aus Naturfaser.

Diese betreffen auch den Schmelzkleber mit definierten Eigenschaften.

Ein weiterer abhängiger Anspruche beansprucht ausgewählte Samenkörner aus Pflanzenarten.

Die Ansprüche 10 bis 13 beanspruchen ein bevorzugtes Verfahren zur Herstellung des flächenhaften Saatträgers der Erfindung.

Die Ansprüche 14 und 15 beanspruchen ein bevorzugtes Verfahren zur Verwendung des flächenhaften Saatträgers der Erfindung.

Unter dem Begriff " imprägniertes Netz aus Naturfasern " wird auch der Begriff " Netz aus imprägnierten Naturfasern " oder " Netz aus Naturfasern" verstanden. Unter " Imprägnierung " wird eine Behandlung der Naturfasern vor oder nach der Herstellung der netzförmigen Fläche als " flächenhafter Saatträger " verstanden.

Die Imprägnierung bewirkt den technischen Effekt der Sicherung gegen eine vorzeitige Verrottung des flächenhaften Saatträgers im Kulturboden. Die Imprägnierung sichert für die Kultivierungsdauer die Erhaltung der Stabilität und der Zugkraft für die praktische Handhabung bei der Pflanzung und der Ernte der Kulturpflanzen.

Die Imprägnierung erfolgt mit Präparierungsmitteln, welche die Oberfläche und die innere, kapillare Struktur der Naturfasern gegen witterungsbedingte und gegen biologische Einflüsse für die Kultivierungsdauer sicher schützen.

Solche Imprägnierungsmittel sind natürliche Öle und Wachse, Gumen, oder auch synthetische Stoffe, wie Öle, Wachse, Paraffine, in flüssiger oder gelöster Phase. Solche Mittel sind auch Dispersionen von Latex, Kautschuk, Kunststoffen, wie Polyvinyl-, Acryl-Verbindungen, oder Hydrophobierungsmittel, wie Metallseifen, Al- Verbindungen.

Diese Mittel werden in solchen Mengen eingesetzt, dass die Wirkung während der Kultivierungsdauer gesichert ist.

Der technische Effekt des Saatträgers der Erfindung besteht auch in der Kombination des durch Abstreifen aufgetragenen Schmelzklebers mit dem Netz aus unverrottbarem Kunststoff oder imprägnierten Naturfasern.

Ein weiterer technischer Effekt besteht in der Dicke, dem Abstand und dem Verbund der Naturfasern in dem unverrottbaren Netz zur Stärkung der Zugkraft beim Abheben des Netzes vom Boden zur Erleichterung der Ernte und zur Erzielung einer höheren Qualität der geernteten Pflanzen durch Vermeidung einer Beschädigung der oberirdischen Pflanzenteile und des Wurzelwerkes.

Ein weiterer technischer Effekt besteht in der Dauer der Klebewirkung des Schmelzklebers bei der Durchführung der Verfahrensmassnahmen des Aufklebens der Samenkörner und des unverrottbaren Netzes aus Kunststoff oder aus Naturfasern.

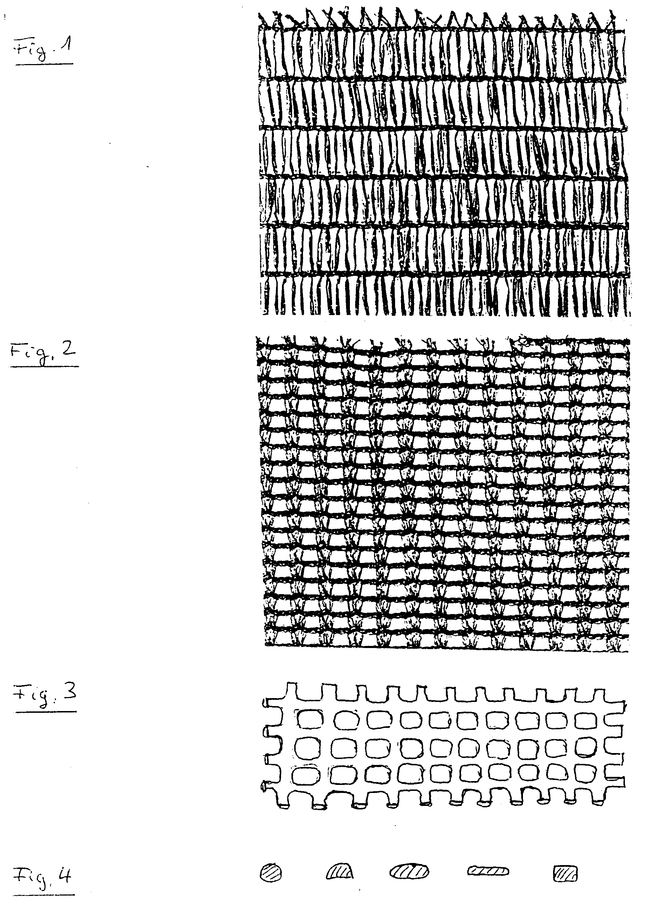

Die beispielsweise Ausbildung des Netzes aus Kunststoff des Saatträgers der Erfindung wird in den Figuren erläutert. Figur 1 und 2 zeigen alternative Netze mit leiterartigen Querbändern zwischen den Stegen, wobei die Stege aus in Längsrichtung verflochtenen Querbändern gewirkt sind. Figur 3 zeigt das Netz aus Kunststoff mit kreuzförmig verschränkten, gegossenen oder verschweißten, nicht verflochtenen Fäden von rundem Querschnitt. Figur 4 zeigt alternative Fadenquerschnitte.

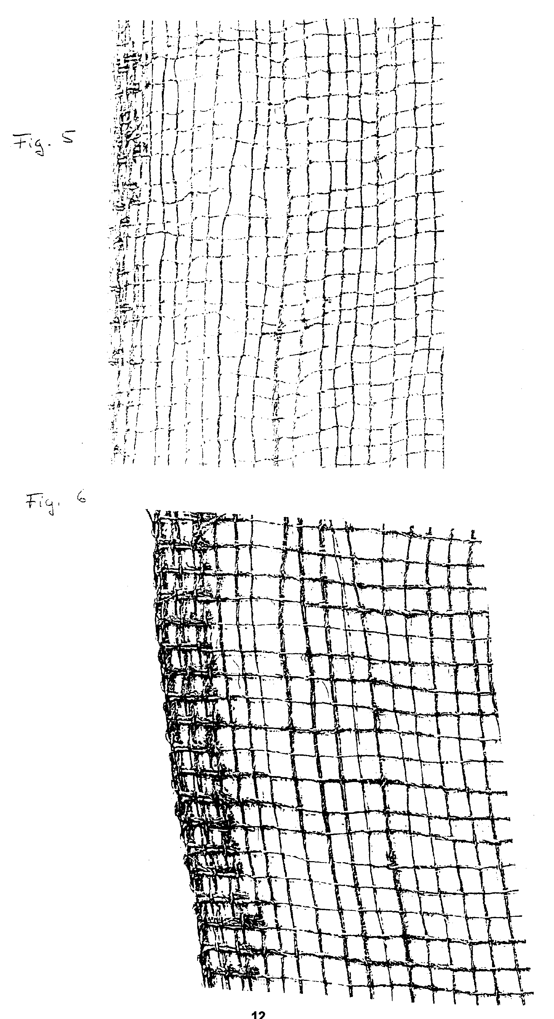

Figur 5 und 6 zeigen während der Kultivierungsdauer der Pflanzen aus den Samenkörnern unverrottbare, imprägnierte Netze aus Naturfaser wie aus Jute oder Sisal mit kreuzförmiger Verschränkung oder mit verwobenen Randverstärkungen oder mit regelmässig in der Breite des Netzes angeordneten, verstärkten Fäden.

Die Herstellung des flächenhaften Saatträgers der Erfindung beschreibt das folgende Ausführungsbeispiel.

Beispiel 1.

Von einer gebremsten Rolle wird eine Papierbahn (Gewicht 12 g/m$^2$,Dicke 0,01 bis 0,05 mm, Faserlänge durchschnittlich 1 mm von 0,1 bis 2,5 mm, Bruchlast 700 bis 800 Pond nach DIN 53 112) in 40 cm Breite über eine ebene Führungsbahn mittels einer Aufrollvorrichtung mit einer Zugbelastung von etwa 500 Pond gespannt und dabei mit einem Vorschub von 20 m/min unter einer Schlitzdüse anliegend hindurchgeführt.

Die Düse wird mittels eines thermostatisch auf 140 °C beheizten Vorratsbehälters und Zufuhrschlauches und mittels einer geregelten Pumpe mit dem Schmelzkleber beschickt. Die Dosierung wird so eingestellt, dass mit dem Verbrauch von 4,8 kg/h die Papierbahn ganzflächig mit 10 g/m$^2$ beschichtet ist und die Beschichtungsfläche einen gleichmässig dichtporösen,dünnen Belag bildet.

Im Abstand von 1 m hinter der Düse ist die beschichtete Oberfläche der Papierbahn unter 40 °C abgekühlt, gegebenenfalls mittels zusätzlichem Kühlgebläse. Über eine geeignete Ablegevorrichtung werden 2000 Samen von Feldsalat (Valerianella locusta) je m$^2$ in regelmäßigen exakten Abständen aufgelegt: 20 Reihen nebeneinander im Abstand von 2 cm zueinander, rechts und links 1 cm Abstand zum Rand der Papierbahn, und 2,5 cm Abstand in der Reihe.

Unmittelbar dahinter wird von einer gebremsten Rolle ein Kunststoffnetz mit der Dicke der geflochtenen Stege von 1 bis 1,5 mm in einer Breite von 40 cm durch eine Querführungsvorrichtung und unter einer an freien Hebeln angelenkten belastbaren drehenden, gegebenenfalls mit Noppen versehenen Schaumstoffwalze hindurch genau deckend auf die mit Schmelzkleber und Samen belegte Papierbahn geführt. Das Kunststoffnetz wird ebenfalls in der Aufrollvorrichtung eingespannt. Die Samen liegen überwiegend in den freien Querschnitten des Flechtwerkes des Kunststoffnetzes.

Bei sortenabhängig größeren Samen als 1,5 mm im Durchmesser könnten diese über die Dicke des Kunststoffnetzes hinausstehen und somit bei der Handhabung des Saatträgers abgestreift werden. Deshalb wird gegebenenfalls hinter der Zuführung des Kunststoffnetzes eine weitere Bahn aus Zellstoffwatte (Gewicht 15 - 20 g/m$^2$ , Dicke 0,005 bis 0,02 mm, Porenvolumen über 20 %) von einer gebremsten Rolle mittels Querführungsvorrichtung unter die Andruckrolle aus Schaumstoff deckend über die vorherigen Bahnen und ebenfalls zur gemeinsamen Aufrollvorrichtung geführt.

Zur flächigen Verbindung von Papierbahn(en) und Kunststoffnetz zwischen den Samen wird die Gewichtsbelastung der Schaumstoffwalze auf der festen Führungsbahn auf insgesamt 5 kg erhöht.

Diese Massnahme erweist sich als vorteilhaft, indem die Noppen der Schaumstoffwalzen die die weitere Bahn aus Zellstoffwatte um die Samen herum und in die Lücke des Netzes auf die mit dem Schmelzkleber beschichteten Papierbahnen presst und dadurch die Samenkörner fixiert und sie bei der Herstellung und Handhabung des flächenhaften Saatträgers der Erfindung vor dem Abstreifen bewahrt.

Der aufgerollte durch den Schmelzkleber aus Papierbahnen und Kunststoffnetz fest verbundene Saatträger wird in vorgegebenen Längen bis zu 100 m hergestellt oder von der Rolle in kulturgeeigneten Teillängen abgeschnitten und verpackt.

Die Verwendung des Saatträgers der Erfindung zeigen die folgenden Ausführungsbeispiele.

Beispiel 2

Nach Beispiel 1 hergestellte Rollen des Saatträgers mit Samen von Feldsalat (Valerianella locusta) von 10, 25 oder 50 m Länge werden unter Glas oder Folientunnel auf einem feinkrümelig vorbereiteten und sorgfältig ohne Vertiefungen geglätteten Saatbett mittels einer geeigneten trag- oder fahrbaren Vorrichtung abgerollt und zu optimalem Bodenschluß angedrückt. Direkt dahinter wird mittels einer Rüttelsiebvorrichtung eine etwa 1 cm dicke Schicht eines Anzuchtsubstrates gleichmäßig flächendeckend aufgetragen. Danach erfolgt die kulturgerechte Bewässerung und gegebenenfalls Beheizung des Glashauses oder der Folientunnel. Die Samen keimen in dem Saatbett unter Substratabdeckung und Bewässerung aus dem Saatgutträger unbehindert und vergleichsweise zu herkömmlichen Anzuchtmethoden ohne Keimminderung. Die Entwicklung zunächst der Wurzeln und dann der Pflanzen ist dagegen sehr viel gleichförmiger als bei den in der Regel breitwürfig ausgesäten herkömmlichen Methoden, da die exakte Positionierung der Samen im Saatträger den optimalen Standraum der Einzelpflanzen bewirkt. Innerhalb der Kulturzeit, die je nach Temperaturen von 4 bis 14 °C ab Mitte September/Oktober 3 - 3,5 Monate beträgt, ist die Verrottung der Papier bahnen vollständig abgeschlossen, und die Pflanzen stecken mit dem Wurzelwerk unterhalb, mit den zusammengewachsenen Blattstielen oberhalb des Kunststoffnetzes.

Zu Ernte wird das Ende des Kunststoffnetzes aus dem Substrat gezogen und einer fahrbaren Erntevorrichtung zugeführt. Diese kann aus einer gerüttelten Führungsbahn zu einer höher gelegenen Arbeitsplattform mit Sitzplätzen bestehen, mit einer scharfen Vorderkante als Abstreifer für das Wurzelwerk mit der in den Wurzeln noch anhaftenden Erde direkt an der Unterseite des Kunststoffnetzes, und einer nachgeordneten Wende- und Bürstenvorrichtung zur Entfernung der auf dem Kunststoffnetz noch aufliegenden Substratschicht, und einer Duschvorrichtung zum Abwaschen des Kunststoffnetzes. An der Arbeitsplattform werden die Feldsalatpflanzen in geeigneter Arbeitshöhe geschnitten.

Der besondere Vorteil dieses Verfahrens und der Anordnung liegt nicht nur in der erstmals möglichen überwiegenden Mechanisierung, damit Rationalisierung und Erleichterung der Pflanzenentnahme, die sonst vom Personal in gebückter Haltung von Pflanze zu Pflanze sich fortbewegend ausgeführt würde. Vielmehr hat sich auch die Erntequalität entscheidend dadurch verbessert, daß herkömmlich durch Körperhaltung, Draufsicht, Ermüdung und Bodenunebenheiten sehr viele abgeschnittene einzelne Blätter erzielt werden. Die herausragende neue Qualität der erleichterten Ernte besteht darin, daß ausschließlich direkt vor Augen die aus mehreren Blättern zusammengewachsene Pflanze exakt über dem Kunststoffnetz geschnitten werden kann und keine einzelnen Blätter anfallen, womit sich Pflanzenqualität und der wirtschaftliche Wert erhöhen.

Das gereinigte, gewaschene und gegebenenfalls getrocknete Kunststoffnetz wird aufgerollt und zur erneuten Einarbeitung zu Saatträger zurückgeschickt.

Beispiel 3

Nach Beispiel 1 hergestellte Rollen mit Samen von Winterportulak, oder auch Winterpostelein oder auch Kubaspinat genannt, werden entsprechend der Länge eines Anzuchtbeckens zum Beispiel zu 2 m abgeschnitten.

Diese Becken enthalten eine kulturgeeignete Nährlösung und können in beheizten Räumen, unter Glas oder Folientunnel stehen. Der abgelängte Saatträger wird auf einer in dieser Nährlösung geeignet angebrachten Supportvorrichtung oder Tragegerüst so abgelegt, daß die Nährlösung den Saatträger und damit die Samen von unten benetzt und diese unbehindert keimen können. Die Wurzeln entwickeln sich durch die untere Papierbahn unter deren Auflösung frei in die Nährlösung hinein.

Die je nach Temperaturen von 4 bis 14°C im Zeitraum vom September bis März aus dem Saatträger kultivierten Pflanzen werden, gegebenenfalls durch Herausnahme auf einem Tisch,nach 6 bis 8 Wochen erstmalig zur Ernte geschnitten. 3 bis 4 Schnitte sind durch Nachwachsen je nach Kulturbedingungen in gleicher Weise möglich. Nach dem letzten Schnitt können die Stücke des Saatgutträgers entnommen, von noch anhaftenden Wurzeln und Papierresten durch Bürsten befreit, und gegebenenfalls getrocknet, zurückgeschickt werden. Die Stücke können entweder einzeln nacheinander durch Auflegen wieder zu dem Saatträger eingearbeitet werden oder vor der Einarbeitung durch Aneinanderkleben der Enden zur Rolle verlängert werden.

Beispiel 4

Es wird gemäss Beispiel 1 auf die mit dem schmelzkleber und Samen belegte Papierbahn ein bis nach dem Ende der Kultivierungsdauer unverrottbares Netz aus imprägnierter Jute im gleichen Format und mit gleichen Verfahrensmassnahmen zugeführt und aufgedrückt und gegebenenfalls mit einer weitere, dünneren Papierbahn abgedeckt, danach aufgerollt oder erst im Teillängen abgeschnitten. Nach der Ausbringung des flächenhaften Saatträgers und nach Abschluss der Kultivierung und nach dem Ernten der Pflanzen wird, wie nach den Beispielen 2 und 3, das Netz aus imprägnierter Jute nicht von den noch anhaftenden Erdteilen und Pflanzenresten gereinigt und aufbewahrt zur erneuten Verwendung, sondern dieses direkt einer Kompostierung zugeführt.

Das mit maximal 2 Gew.-% geruchsfreiem, hochgereinigtem Weissöl ohne Zusatz von weiteren Chemikalien imprägnierte Jutegewebe nach Figur 5, Type H 275 JWE der Firma Jute- Weberei Emsdetten in D- 4407 Emsdetten, weist nach 14 Wochen Kultivierungsdauer unter durchschnittlichen Tagestemperaturen von 25 - 2°C und täglicher Beregnung mit 2 - 4 Liter/ qm in einem nicht sterilisiertem Gewächshaus- Substrat noch eine solche Zugfestigkeit auf, dass danach das Netz mit den Pflanzen und erdbehafteten Wurzelwerk, sowie mit etwa 1 cm obenauf liegender Erdabdeckung vom Boden hochgezogenm und geerntet werden kann.

Bei fachgerechter Kompostierung zusammen mit Pflanzenresten und Erde verrottet das Jutegewebe spätetens nach etwa 1 bis 2 Jahren vollständig.

Der flächenhafte Saatträger der Erfindung bietet erstmalig die Möglicheit einer technisch besonders rationellen Arbeitsweise des Pflanzens und des Erntens mit erhöhter Wirtschaftlichkeit und Qualität der mit diesem geernte Pflanzen. Dieser bietet erstmalig die Möglichkeit, des Erntens sowohl der Oberteile der Pflanzen, wie beispielsweise Feldsalat und Winterportulak, oder des Erntens der Wurzelteile von Pflanzen, wie bespielsweise Karotten.

Der flächenhafte Saatträger der Erfindung ist in seiner Verwendung nicht beschränkt, da dieser in seiner Zugkraft und Stabilität eingestellt werden kann.

Die Verwendung imprägnierter Naturfasern als Netz bietet durch die Kompostierung eine ökologisch einwandfreie Beseitigung der Rückstände nach der Ernte.

**Patentansprüche**

1. Flächenhafter Saatträger mit einer unteren dünnen, verrottbaren Papierbahn, einem darauf abgestreiften Klebstoff, auf dem positionsgenau mit optimalem Kulturabstand Samenkörner aufgeklebt sind, und mit einer oberen, aufgeklebten, dünneren, verrotbaren Papierbahn, wobei der Saatträger aufgerollt oder in Teillängen abgeschnitten ist, dadurch gekennzeichnet, dass der Klebstoff ein wasserunlöslicher Schmelzkleber ist, der im Temperaturbereich von unter 40°C bis zu Raumtemperatur und bei einem Andrücken mit Schaumstoffwalzen oder Noppenwalzen druckklebrig bleibt, und der in einer Menge von 3 bis 15 g/cm² in dünner Schicht auf die untere Papierbahn aufgebracht wird, wodurch die aufgeklebten Samenkörner dauerhaft mit der unteren Papierbahn verbunden bleiben, und dass über den Samenkörnern ein Netz aus unverrottbarem Kunststoff, oder ein während der Kultivierungsdauer der sich aus den Samenkörnern entwickelnden Pflanzen unverrottbares, imprägniertes Netz aus Naturfasern so aufgeklebt ist, dass die Samenkörner in den Lücken des Netzes posioniert sind.

2. Flächenhafter Saatträger nach Anspruch 1, dadurch gekennzeichnet, dass das Netz aus Naturfasern mit natürlichen Ölen, Wachsen, Gumen, oder mit synthetischen Ölen, Wachsen, Paraffinen in flüssiger oder gelöster Phase, oder mit Dispersionen von Latex, Kautschuk, Kunststoffen, wie Polyvinyl-, Acryl- Verbindungen, oder mit Hydrophobierungsmitteln, wie Metallseifen, Al- Verbindungen imprägniert ist.

3. Flächenhafter Saatträger nach Anspruch 1, dadurch gekennzeichnet, dass das Netz aus Kunststoff aus einem platten, unverrottbaren, insbesondere aus einem UV- stabilisierten und Keimungs physiologisch umbedenklichen Kunststoffaden, vorzugsweise aus Niederdruck- Polyethylen, besteht.

4. Flächenhafter Saatträger nach den Ansprüchen 1 oder 3, dadurch gekennzeichnet, dass das Netz aus Kunststoff aus leiterartigen Querbändern und aus zwischen diesen Querbändern längs geflochtenen Stegen besteht, und die Stege einen solchen Abstand aufweisen, dass die Wurzeln und die Keimblätter der aus den Samenkörnern wachsenden Pflanzen sich durch den Freiraum zwischen den Querbändern und Stegen entwickeln können, und dass die geflochtenen Stege eine so hohe Zugkraft aufweisen, dass das Netz aus Kunststoff vom Erdboden abgehoben werden kann zur mechanischen Ernte der Pflanzen.

5. Flächenhafter Saatträger nach einem der Ansprüche 1, 3 oder 4, dadurch gekennzeichnet, dass das Netz aus Kunststoff aus kreuzweise verschränkten, gegossenen, verschweißten, nicht geflochtenen Fäden mit flachem oder rundem oder elliptischen Querschnitt besteht, und die Fäden einen Abstand von 0,2 bis 2 cm, insbesondere von 0,5 cm, aufweisen.

6. Flächenhafter Saatträger nach einem der Ansprüche 1 oder 2, dadurch gekennzeichnet,dass das Netz aus imprägnierten Naturfasern aus Fäden der Dicke von 0,3 bis 0,5 cm besteht, und dass die Fäden im Abstand von 0,2 bis 2 cm, insbesondere von 0,5 cm, miteinander kreuzförmig verschränkt oder verflochten sind.

7. Flächenhafter Saatträger nach einem der Ansprüche 1, 2 oder 6, dadurch gekennzeichnet, dass die Fäden vom Rand des Netzes aus imprägnierten Naturfasern in einer Breite von 0,5 bis 1,5 cm enger verschränkt oder verflochten sind, und dass jeder fünfte bis zehnte Faden gleichmässig über die Netzbreite aus einem stärkeren Faden besteht zur Verstärkung auf eine so hohe Zugkraft, dass das Netz aus imprägnierten Naturfasern vom Erdboden angehoben werden kann zur mechanischen Ennte der Pflanzen.

8. Flächenhafter Saatträger nach einem der Ansprüche 1 bis 7, dadurch gekennzeichnet, dass der wasserunlösliche Schmelzkleber aus Ethyl-Vinyl-Acetat- Copolimerisat mit einer Verarbeitungstemperatur von 120 bis 170°C und mit einer Viskosität von 1500 bis 2000 mPas bei 170°C besteht.

9. Flächenhafter Saatträger nach einem der Ansprüche 1 bis 8, dadurch gekennzeichnet, dass die darauf aufzuklebenden Samenkörner aus Pflanzenarten wie Feldsalat (Valerianella locustal), Winterportulak, Gartenkresse ( Lepidum sativum), Karotte oder Kohl zur Jungpflanzen-Anzucht stammen.

10. Verfahren zur Herstellung des flächenhaften Saatträgers nach einem der Ansprüche 1 bis 9, dadurch gekennzeichnet, dass eine untere dünne verrottbare Papierbahn unter einer Beschichtungsvorrichtung hindurchgeführt und dabei der wasserunlösliche Schmelzkleber abgestreift wird, und danach die zugeführten Samenkörner darauf positionsgenau abgelegt und aufgeklebt werden, wobei der Schmelzkleber unterhalb einer die Samenkörner schädigenden Temperatur von 40°C druckklebrig bleibt, und danach das Netz aus Kunststoff oder Naturfaser zugeführt und darüber aufgeklebt wird, und danach eine dünnere, verrottbare Papierbahn zugeführt und darüber aufgeklebt wird und danach die Bahnen mit Schaumstoffwalzen oder Noppenwalzen angedrückt werden, wobei der Schmelzkleber die Schichten dauerhaft zusammenhält und dadurch die Position der Samenkörner fixiert bleibt, und danach das Aufrollen oder Abschneiden in Teillängen erfolgt.

11. Verfahren nach Anspruch 10, dadurch gekennzeichnet, dass der wasser unlösliche Schmelzkleber in dünner Schicht in einer Dosiermenge von 10 g/ cm$^2$ mit einer Temperatur von 140 bis 150 °C die untere Papierbahn gleichmässig überdeckend abgestreift wird.

12. Verfahren nach den Ansprüchen 10 oder 11, dadurch gekennzeichnet, dass die Dosiermenge des Schmelzklebers in Abhängigkeit von der Geschwindigkeit der unteren Papierbahn bei konstanter Temperatur geregelt wird.

13. Verfahren nach einem der Ansprüche 10 bis 12, dadurch gekennzeichnet, dass die Vorschubgeschwindigkeit der unteren Papierbahn 5 bis 30, insbesondere 20 m/min, beträgt, und dass das Abstreifen des Schmelzklebers und gegebenenfalls das Abkühlen der beschichteten, unteren Papierbahn auf unter 40°C mittels eines Kühlgebläses und das Aufkleben der Samenkörner und das Aufkleben des Netzes aus Kunststoff oder Naturfaser und das Aufkleben der dünnere, oberen Papierbahn innerhalb eines Vorschubes der unteren Papierbahn von 0,5 bis 2 m, insbesondere von 1 m, erfolgt.

14. Verfahren zur Verwendung des flächenhaften Saatträgers nach einem der Ansprüche 1 bis 9, dadurch gekennzeichnet, dass der Saatträger mit einer Abrollvorrichtung in Bahnen auf feinkrümelig vorbereitete, eben geglättete Feldflächen in dem Feld angepassten Teillängen aufgebracht, angedrückt und danach mit Erde oder Anzuchtsubstrat abgedeckt wird, danach in der Wächstumsperiode der Pflanzen aus den Samenkörnern eine Verrottung der Papierbahn erfolgt, danach zur Ernte der Kulturpflanzen die Netze aus Kunststoff oder Naturfaser aus dem Boden gezogen und die anhaftenden, nicht zu erntenden Pflanzenteile , wie das Wurzelwerk, mit eingeschlossener Erde abgestreift, und die zu erntenden Pflanzenteile, wie die Oberteile, zusammengefasst, abgetrennt und verpackt werden, und danach die verbleibenden Netze aus Kunststoff zu deren Wiederverwendung gereinigt, gewaschen, gegebenenfalls getrocknet und zuzammengerollt werden oder die verbleibenden Netze aus Naturfaser ohne weitere Reinigung zur Kompostierung verbracht werden.

15. Verfahren zur Verwendung des flächenhaften Saatträgers nach einem der Ansprüche 1 bis 9, dadurch gekennzeichnet, dass der Saatträger in Teillängen entsprechend der Länge eines Nährlösung enthaltenden Beckens auf einem Gerüst mit grossen, freien Durchlässen abgelegt wird, danach die in dem flächenhaften Saatträger positionsgenau abgelegten Samenkörner von unten mit der Nährlösung benetzt werden und keimen, und in der Wachstumsperiode der Pflanzen aus den Samenkörnern die Papierbahnen aufgelöst werden, danach die Teillängen des Netzes angehoben werden zur Ernte der Pflanzen, oder diese herausgenommen werden und von den Teillängen des Netzes die Pflanzenteile, wie die Oberteile, zusammengefasst, abgetrennt und verpackt werden, danach die Teillängen mit den verbleibenden Pflanzenteilen, wie die Wurzeln, auf das Gerüst wieder abgelegt werden in dem Becken mit der Nährlösung danach der Erntevorgang mit nachwachsenden Pflanzen in gleicher Weise mehrfach wiederholt wird, und danach die Netze aus Kunststoffzu deren Wiederverwendung gereinigt, gewaschen, getrocknet und zusammengerollt werden oder die Netze aus Naturfaser zur Kompostierung gebracht werden ohne weitere Reinigung.

**Claims**

1. A laminar seed carrier with a lower, thin, rottable paper web, an adhesive scraped thereon on which seeds are glued in exact positions at optimum cultivation spacing, and with an upper, glued-on, thin, rottable paper web, the seed carrier being rolled up or cut into partial lengths, characterised in that the adhesive is a water-insoluble hot-melt adhesive which remains pressure-adhesive in the temperature range of below 40°C to room temperature and when being pressed against with foam rollers or napped rollers, and which is applied in a thin layer to the lower paper web in a quantity of 3 to 15 g/cm², which causes the glued-on seeds to remain permanently joined to the lower paper web, and that a net of non-rottable plastics material, or an impregnated net of natural fibres which cannot rot during the period of cultivation of the plants which will develop from the seeds, is glued over the seeds such that the seeds are positioned in the gaps in the net.

2. A laminar seed carrier according to Claim 1, characterised in that the net of natural.fibres is impregnated with natural oils, waxes, gums, or with synthetic oils, waxes, paraffins in liquid or dissolved phase, or with dispersions of latex, rubber, plastics materials, such as polyvinyl or acrylic compounds, or with water-repellent agents, such as metal soaps, Al compounds.

3. A laminar seed carrier according to Claim 1, characterised in that the net of plastics material consists of a flat, non-rottable, plastic filament, in particular of a UV-stabilised plastics filament which is harmless in terms of germination physiology, preferably made of low-pressure polyethylene.

4. A laminar seed carrier according to Claims 1 or 3, characterised in that the net of plastics material is made of ladder-like transverse strips and of crosspieces plaited lengthwise between said transverse strips, and the crosspieces are at such intervals that the roots and the cotyledons of the plants growing out of the seeds can develop through the gap between the transverse strips and the crosspieces, and that the plaited crosspieces have such a high tensile force that the net of plastics material can be lifted from the ground for mechanically harvesting the plants.

5. A laminar seed carrier according to one of Claims 1, 3 or 4, characterised in that the net of plastics material is made of crosswise interlaced, cast, bonded, non-plaited filaments having a flat or round or elliptical cross-section, and the filaments have intervals of 0.2 to 2 cm, in particular of 0.5 cm.

6. A laminar seed carrier according to one of Claims 1 or 2, characterised in that the net is made of impregnated natural fibres consisting of filaments having a thickness of 0.3 to 0.5 cm, and that the filaments are interlaced or plaited together crosswise at intervals of 0.2 to 2 cm, in particular of 0.5 cm.

7. A laminar seed carrier according to one of Claims 1, 2 or 6, characterised in that the filaments of the edge of the net consisting of impregnated natural fibres are interlaced or plaited more tightly in a width of 0.5 to 1.5 cm, and that every fifth to tenth filament regularly across the width of the net consists of a stronger filament for reinforcement to such a high tensile force that the net of impregnated natural fibres can be lifted from the ground for mechanically harvesting the plants.

8. A laminar seed carrier according to one of Claims 1 to 7, characterised in that the water-insoluble hot-melt adhesive consists of ethyl-vinyl-acetate copolymer having a processing temperature of 120 to 170°C and a viscosity of 1500 to 2000 mPas at 170°.

9. A laminar seed carrier according to one of Claims 1 to 8, characterised in that the seeds which are to be glued thereto comes from plant types such as lamb's lettuce (valerianella locustal [sic]), miner's lettuce, garden cress (lepidum sativum), carrot or cabbage for plant raising.

10. A process for producing the laminar seed carrier according to one of Claims 1 to 9, characterised in that a lower thin rottable paper web is passed through beneath a coating apparatus and in so doing the water-insoluble hot-melt adhesive is scraped off, and then the seeds which are supplied are laid thereon and are glued thereto in accurate positions, the hot-melt adhesive remaining pressure-adhesive below a temperature of 40°C which would damage the seeds, and then the net of plastics material or natural fibres is supplied and is glued thereon, and then a thinner, rottable paper web is supplied and glued thereon, and then the webs are pressed against by foam rollers or napped rollers, the hot-melt adhesive holding the layers together permanently and the position of the seeds remaining fixed thereby, and then rolling-up or cutting into partial lengths takes place.

11. A process according to Claim 10, characterised in that the water-insoluble hot-melt adhesive is scraped off in a thin layer in a metered quantity of 10 g/cm$^2$ at a temperature of 140 to 150°C, covering the lower paper web evenly.

12. A process according to Claims 10 or 11, characterised in that the metered quantity of the hot-melt adhesive is controlled at a constant temperature dependent on the speed of the lower paper web.

13. A process according to one of Claims 10 to 12, characterised in that the rate of advance of the lower paper web is 5 to 30, in particular 20, m/min, and that the scraping-off of the hot-melt adhesive and optionally the cooling of the coated, lower paper web to below 40°C by means of a cooling fan and the glueing-on of the seeds and the glueing-on of the net of plastics material or natural fibres and the glueing-on of the thinner, upper paper web take place within an advance of the lower paper web of 0.5 to 2 m, in particular of 1 m.

14. A process for using the laminar seed carrier according to one of Claims 1 to 9, characterised in that the seed carrier is applied with a unrolling device in webs on to fine crumbly prepared, evenly smoothed field surfaces in partial lengths matched to the field, pressed on and then covered with earth or propagation substrate, then rotting of the paper web takes place in the growth period of the plants from the seeds, then for harvesting the cultivated plants the nets of plastics material or natural fibres are drawn out of the ground and the adhering parts of the plant which are not to be harvested, such as the roots, are scraped off with the soil enclosed, and the parts of the plant which are to be harvested, such as the upper parts, are collected, separated and packed, and then the remaining nets made of plastics material are cleaned, washed, optionally dried and rolled up for the re-use thereof, or the remaining nets of natural fibres are taken for composting without further cleaning.

15. A process for using the laminar seed carrier according to one of Claims 1 to 9, characterised in that the seed carrier is laid in partial lengths on a frame with large free openings corresponding to the length of a basin containing a nutrient solution, and then the seeds laid in accurate positions in the laminar seed carrier are wetted with the nutrient solution from below and germinate, and in the growth period of the plants from the seeds the paper webs are disintegrated, then the partial lengths of the net are lifted for harvesting the plants, or the latter are removed and the parts of the plant, such as the upper parts, are combined, separated and packed from the partial lengths of the net, the partial lengths are then laid back on the frame in the basin with the nutrient solution again with the remaining parts of the plant, such as the roots, then the harvesting operation with renewed growth of plants is repeated several times in the same manner, and then the nets made of plastics material are cleaned, washed, optionally dried and rolled up for the re-use thereof, or the nets of natural fibres are taken for composting without further cleaning.

**Revendications**

1. Feuille porte-semences avec une bande inférieure en papier putrescible sur laquelle est enduite une colle et sur laquelle des graines de semence sont collées à écart de culture optimal, et avec une plus fine bande supérieure en papier putrescible collée, le porte-semences étant roulé ou découpé en sections de longueur, caractérisée en ce que la colle est une colle fondante insoluble dans l'eau, qui entre la température ambiante et les températures inférieures à 40°C assure un collage par la pression exercée par des rouleaux en mousse ou à poils, et qui est apposée sur la bande inférieure de papier en couche fine, à un dosage de 3 à 15 g/cm², grâce à quoi les graines de semence sont fixées durablement sur la bande inférieure de papier, et en ce qu'un filet en matériau synthétique non putrescible, ou un filet imprégné, en fibres naturelles non putrescibles pendant la période de culture des plantes se développant à partir des graines de semence, est collé de telle sorte que les graines de semence soient situées à l'intérieur des mailles du filet.

2. Feuille pose-semences selon la revendication 1, caractérisée en ce que le filet en fibres naturelles est imprégné d'huiles naturelles, de cires, de gommes, ou d'huiles, cires ou paraffines synthétiques sous forme liquide ou en phase solubilisée, ou de suspensions de latex, de caoutchouc, de produits synthétiques tels que des composés de polyvinyle ou d'acryle, ou d'agents hydrophobes tels que des minerais de métal ou des composés d'Al.

3. Feuille porte-semences selon la revendication 1, caractérisée en ce que le filet en matière synthétique est constitué de fibres synthétiques plates imputrescibles, et en particulier stabilisées vis-à-vis des rayons UV et insensibles à l'action physiologique de la germination, et de préférence en polyéthylène basse pression.

4. Feuille porte-semences selon les revendications 2 ou 3, caractérisée en ce que le filet en matière synthétique est constitué de bandes transversales disposées en échelle et d'entretoises étirées s'étendant longitudinalement entre ces bandes transversales, et en ce que les entretoises sont disposées à écartement tel que les racines et les cotylédons des plantes se développant à partir des graines de semence puissent se développer dans l'espace libre situé entre les bandes transversales et les entretoises, et en ce que les entretoises entrecroisées présentent une résistance à la traction telle que le filet en matière synthétique puisse être relevé du sol pour la récolte mécanisée des plantes.

5. Feuille porte-semences selon les revendications 2, 3 ou 4, caractérisée en ce que le réseau en matière synthétique est constitué de fibres croisées en croix, coulées, soudées, non entrecroisées, de section aplatie ou circulaire ou elliptique, et en ce que les fibres présentent un écartement de 0,2 à 2 cm, et de préférence de 0,5 cm.

6. Feuille porte-semences selon la revendication 1, caractérisée en ce que le filet en fibres naturelles imprégnées est constitué de fils d'une épaisseur de 0,3 à 0,5 cm, et en ce que les fils disposés à un écartement de 0,2 à 2 cm, et de préférence de 0,5 cm, sont mutuellement croisés en croix ou sont entrecroisés.

7. Feuille porte-semences selon les revendications 1, 2 ou 6, caractérisée en ce que les fils des bords du filet, en fibres naturelles imprégnées, sont étroitement croisés ou entrecroisés sur une largeur de 0,5 à 1,5 cm, et en ce que de manière régulière sur toute la largeur du filet chaque cinquième ou dixième fil est un fil plus résistant, en vue d'un renforcement jusqu'à une résistance à la traction telle que le filet en fibres naturelles imprégnées puisse être relevé du sol pour la récolte mécanisée des plantes.

8. Feuille porte-semences selon les revendications 1 à 7, caractérisée en ce que la colle fondante insoluble dans l'eau consiste en un copolymère d'éthyl-vinylacétate dont la température de traitement est de 120°C à 170°C et la viscosité de 1500 à 2000 mPas à 170°C.

9. Feuille porte-semences selon les revendications 1 à 8, caractérisée en ce que les graines de semence à coller dessus proviennent de plantes telles que la salade de blé (Valerianella locusta), le pourpier d'hiver (portulac), le cresson de jardin (Lepidum sativum), ou sont des semences de carotte ou de chou semées pour repiquage ultérieur.

10. Procédé de fabrication de la feuille porte-semences selon les revendications 1 à 9, caractérisé en ce que l'on fait traverser un dispositif d'enduisage par une feuille de papier fine et putrescible en vue d'y étendre la colle fondante insoluble dans l'eau, qu'ensuite les graines de semences amenées sont déposées et collées en des positions précises sur cette feuille enduite, la colle fondante restant adhésive en-dessous d'une température dommageable pour les graines de semence de 40°C, qu'ensuite le filet en matière synthétique ou en fibres naturelles est amené sur la feuille enduite et y est collé, qu'ensuite une bande de papier plus fin et putrescible est amenée par-dessus et est collée, qu'ensuite les bandes sont comprimées à l'aide de rouleaux de mousse ou de poils, grâce à quoi la colle fondante maintient durablement les feuilles ensemble et la position des graines de semence est maintenue, et qu'ensuite s'effectue de roulage ou la découpe en sections de feuille.

11. Procédé selon la revendication 10, caractérisé en ce que la colle fondante insoluble dans l'eau est étendue sur la bande inférieure de papier à recouvrement régulier, en fine couche et à un dosage de 10 g/cm², à une température de 140 à 150°C.

**12.** Procédé selon la revendication 10 ou 11, caractérisé en ce que le dosage de la colle fondante est réglé à température constante et en fonction de la vitesse de la bande inférieure de papier.

**13.** Procédé selon l'une des revendications 10 à 12, caractérisé en ce que la vitesse d'avancement de la bande de papier vaut de 5 à 30, et en particulier 20 m/min, et en ce que les opérations d'enduisage de la colle fondante et éventuellement de refroidissement à moins de 40°C de la bande inférieure de papier à l'aide d'un ventilateur de refroidissement, de collage des graines de semence, de collage du filet en matière synthétique ou en fibres naturelles et de collage de la bande supérieure de papier plus fin s'effectuent pendant que la bande inférieure de papier avance de 0,5 à 2 m, et en particulier de 1 m.

**14.** Procédé d'utilisation de la feuille porte-semences selon l'une des revendications 1 à 9, caractérisé en ce que le porte-semences est déposé à l'aide d'un dispositif de déroulement sur des surfaces de sol préparé, finement ameubli et égalisé, en bandes de longueur appropriée au terrain, est ensuite recouvert de terre ou d'un substrat de culture, qu'ensuite, au cours de la période de croissance des plantes à partir des graines de semence a lieu une putréfaction de la bande de papier, qu'ensuite, pour la récolte des plantes cultivées, les filets en matière synthétique ou en fibres naturelles sont retirées du sol et les parties non à récolter des plantes, qui ne doivent pas être récoltées, comme le système racinaire, sont raclées avec la terre incorporée, et les parties des plantes à récolter, par exemple les parties aériennes, sont rassemblées, séparées et emballées, et qu'ensuite les restes des filets en matière synthétique sont, en vue de leur réutilisation, nettoyés, lavés, éventuellement séchés et réenroulés, tandis que les filets en fibres naturelles sont amenés au compostage sans autre nettoyage.

**15.** Procédé d'utilisation de la feuille porte-semences selon l'une des revendications 1 à 9, caractérisé en ce que le porte-semences est déposé sur une structure présentant de grands passages libres en longueurs correspondant à la longueur d'un bac contenant une solution nutritive, qu'ensuite les graines de semence déposées en positions précises sur la feuille porte-semences sont mouillées par-dessous par la solution nutritive et germent, les bandes de papier se décomposant au cours de la période de croissance des plantes provenant des graines de semence, qu'ensuite les longueurs de filet sont relevées en vue de la récolte des plantes ou que celles-ci sont enlevées, et les parties des plantes qui doivent être récoltées, comme les parties supérieures, sont rassemblées, séparées des longueurs de filet et emballées, qu'ensuite les longueurs retenant encore les parties des plantes qui ne doivent pas être récoltées, comme les systèmes racinaires, sont à nouveau déposées sur la structure et dans le bac contenant la solution nutritive, qu'ensuite l'opération de récolte est répétée plusieurs fois sur les plantes poursuivant leur croissance, et qu'ensuite les filets en matière synthétique sont en vue de leur réutilisation nettoyés, lavés, séchés et réenroulés, les filets en fibres naturelles étant amenés au compostage sans autre nettoyage.

Fig. 1

Fig. 2

Fig. 3

Fig. 4

Fig. 5

Fig. 6